# EUROPÄISCHE PATENTSCHRIFT

(11) **EP 0 429 814 B1**
(45) Veröffentlichungstag und Bekanntmachung des Hinweises auf die Patenterteilung: **12.04.1995**
(21) Anmeldenummer: 90119518.0
(22) Anmeldetag: 11.10.1990
(51) Int. Cl.: B01J 19/12, H01J 65/04, A23C 3/07

(54) **Verfahren und Vorrichtung zum Auslösen und/oder Fördern chemischer Prozesse**
Process and apparatus for initiating and/or promoting chemical processes
Procédé et dispositif de déclenchement et de promotion des réactions chimiques

(30) Priorität: 11.10.1989 DE 3933992
(43) Veröffentlichungstag der Anmeldung: 05.06.1991
(73) Patentinhaber: MLS GMBH, D-88299 Leutkirch (DE)
(72) Erfinder: Lautenschläger, Werner, W-7970 Leutkirch (DE)
(74) Vertreter: Schmidt-Evers, Jürgen, Dipl.-Ing.

(56) Entgegenhaltungen:
- EP-A- 0 126 803
- EP-A- 0 335 020
- US-A- 3 276 138
- US-A- 4 199 419
- US-A- 4 529 855
- US-A- 4 718 974
- US-A- 4 835 354

## Beschreibung

Die Erfindung bezieht sich auf ein Verfahren und eine Vorrichtung zum Auslösen und/oder Fördern chemischer Prozesse nach den Oberbegriffen der Patentansprüche 1 und 13.

Aus der Praxis ist bekannt, chemische Prozesse dadurch auszulösen und/oder zu fördern, daß die Aufnahmebehälter mit den darin befindlichen Ausgangsstoffen mit langwelligen elektromagnetischen Wellen, wie beispielsweise Mikrowellen, oder kurzwelligen elektromagnetischen Wellen, wie beispielsweise UV-Licht, bestrahlt werden. Aus der US-PS 4 718 974 ist ein Verfahren zum Ablösen von organischen Polymeren von Probenoberflächen bekannt, das sowohl Mikrowellen als auch UV-Licht verwendet, wobei jedoch lediglich letzteres Licht auf die in einer reaktionsfähigen Gasatmosphäre befindlichen Proben zwecks Einleitung und Durchführung der Ablösungsreaktion einwirkt, während die Mikrowellen nur zur Erzeugung des UV-Lichtes durch Bestrahlung eines in einem Gasreaktionsrohr unter Unterdruck stehenden Gases eingesetzt werden. Ein Drahtgeflecht zwischen dem Gasreaktionsrohr und den Proben reflektiert Mikrowellen und verhindert auf diese Weise deren Einwirkung auf die Proben.

Beide vorstehend genannten, Mikrowellen oder UV-Licht verwendende Bestrahlungsverfahren haben aufgrund ihrer unterschiedlichen Wirkungsweisen ganz spezifische Einsatzbereiche, wobei allerdings auch Überlappungen vorkommen können. Beispielsweise eignet sich die Bestrahlung mit UV-Licht besonders gut zum Abtöten von Keimen, d.h. zur Sterilisation, ohne Temperaturerhöhung oder zur Durchführung von Alterungsversuchen bei Normaltemperaturen, wie sie im Freien herrschen. Die Bestrahlung mit UV-Licht eignet sich hingegen nicht für die Durchführung von Synthesen, da diese im allgemeinen nur bei erhöhten Temperaturen ablaufen. Deshalb wird für die Durchführung von Synthesen vorzugsweise die Mikrowellenbestrahlung eingesetzt, die bei entsprechender Bestrahlungsstärke sehr hohe Temperaturen erzeugen kann. Diese Eigenschaft der Temperaturerhöhung der bestrahlten Stoffe macht die Mikrowellen jedoch ungeeignet für den Einsatz bei chemischen Prozessen, die unter niedrigen Temperaturen ablaufen, wie beispielsweise für die Sterilisation von Milch.

Es ist Aufgabe der Erfindung, ein Verfahren und eine Vorrichtung der eingangs genannten Art zu schaffen, die die Vorteile der bekannten Verfahren und Vorrichtungen ohne deren Nachteile vereinigen.

Diese Aufgabe wird erfindungsgemäß durch die kennzeichnenden Merkmale der Patentansprüche 1 und 13 gelöst.

Erfindungsgemäß können nunmehr mit einem einzigen Verfahren bzw. einer einzigen Vorrichtung diejenigen chemischen Prozesse ausgelöst und/oder gefördert werden, für die bisher zwei Verfahren bzw. zwei Vorrichtungen erforderlich waren.

Die langwellige Primärstrahlung liefert die Energie, die zur Reaktion der Ausgangsstoffe erforderlich ist. Diese Energie wird den Ausgangsstoffen mittels der kurzwelligeren Sekundärstrahlung bei geringeren Strahlungsleistungen und zusätzlich mittels einem Primärstrahlungsanteil bei höheren Strahlungsleistungen zugeführt.

Die kurzwelligere Sekundärstrahlung wird nach dem Prinzip der Gasentladung ohne Elektroden und ohne Stromversorgung lediglich durch Anregung durch die Primärstrahlung erzeugt.

Die dem Gasreaktionsrohr mittels der langwelligen Primärstrahlung pro Zeiteinheit zugeführte Energie löst bei Erreichen einer gewissen unteren Grenze unter vollständiger Absorption durch das unter Unterdruck stehende gas die Emission der kurzwelligeren Sekundärstrahlung aus, die ihrerseits die Reaktion der Ausgangsstoffe im Aufnahmeraum ohne Temperaturerhöhung hervorruft. Bei höheren Strahlungsleistungen treffen im Gasreaktionsrohr nicht absorbierte Primärstrahlungsanteile auf die Ausgangsstoffe und die Reaktionsprodukte auf und bewirken eine Erwärmung derselben entsprechend der pro Zeiteinheit zugeführten Energiemenge.

Das Verfahren und die Vorrichtung gemäß der Erfindung sind für eine Vielzahl chemischer Prozesse geeignet, beispielsweise für Synthesen, für die im allgemeinen hohe Temperaturen erforderlich sind, oder für die Sterilisation von beispielsweise hitzeempfindlichen Produkten, wie etwa Milch, aber auch für Härteversuche an Lacken und Kunststoffen, für Korrosionstests in aggressiver Atmosphäre, für UV-Alterungsversuche, für Aufschlüsse bei niedrigen oder erhöhten Temperaturen und für viele andere chemische Reaktionen.

Die bei Aufschlüssen als Reaktionsprodukte erzeugten aggressiven Radikale werden vorteilhafterweise von gasförmigen Oxydationsmitteln, vorzugsweise Sauerstoff oder Halogenen, abgespalten. Dabei können die Reaktionsprodukte vom Sauerstoff in den Ausgangsstoffen abgespalten oder aus einem den Ausgangsstoffen zugeführten Gas gebildet werden.

Vorteilhafterweise werden als kurzwelligere Strahlen UR-Strahlen, sichtbare Lichtstrahlen oder vorzugsweise UV-Strahlen erzeugt. Letztere Strahlen können in einem

Gasreaktionsrohr mit einer Edelgasfüllung mit oder ohne Quecksilberzusatz oder mit einer Stickstoffüllung erzeugt werden.

Vorzugsweise ist das Gasreaktionsrohr als Teil eines Laser-Oszillators ausgebildet, um die Sekundärstrahlung durch den Laser-Effekt zu verstärken.

Eine vorteilhafte Form des Gasreaktionsrohrs ist die eines Ringrohres, wobei der vom Ringrohr umschlossene Raum zur Aufnahme des Aufnahmebehälters für Ausgangsstoffe vorgesehen ist. Auf diese Weise wird der Aufnahmebehälter besonders effektiv allseitig bestrahlt.

Vorzugsweise werden als Primärstrahlung in einem Mikrowellengenerator erzeugte Mikrowellen verwendet.

Gemäß einer Weiterbildung der Erfindung ist der Generator zur Ausstrahlung der Primärstrahlung in Form ungepulster langwelliger elektromagnetischer Wellen ausgebildet und weist eine Steuereinrichtung zur Steuerung seiner Dauerleistung auf. Die ungepulste langwellige Primärstrahlung erzeugt eine ebenfalls ungepulste kurzwelligere Sekundärstrahlung, so daß die erstere Strahlung ohne Beeinflussung der letzteren Strahlung in ihrer Leistung verändert werden kann. Auf diese Weise können die Reaktionsprodukte ohne weiteres bei Raumtemperaturen oder erhöhten Temperaturen gebildet werden, wobei letztere Temperaturen durch Bestrahlung der Ausgangsstoffe mit dem Primärstrahlungsanteil erzeugt werden. Hierbei kann der durch die Sekundärstrahlung beschleunigte oder beschleunigt ausgelöste chemische Prozeß bei atmosphärischen oder Überdruck durchgeführt werden.

Zur Durchführung der chemischen Reaktionen unter dem Einfluß der kurzwelligeren Sekundärs Strahlung und ggf. dem Primärstrahlungsanteil kann der Aufnahmebehälter ein offener oder ein verschließbarer Behälter sein. Der offene Behälter eignet sich beispielsweise zur Durchführung von Aufschlüssen im Freien mit Sauerstoff als Oxydationsmittel. Der verschließbare Behälter kann für chemische Reaktionen eingesetzt werden, die unter atmosphärischem Druck oder unter Überdruck ablaufen. Vorzugsweise weist der verschließbare Behälter einen Zuleitungsanschluß auf, der beispielsweise zur Zufuhr eines gasförmigen Ausgangsstoffes dienen kann. Weiterhin kann der verschließbare Aufnahmebehälter mit einem Entlüftungsanschluß ausgebildet sein, so daß der chemische Prozess bei atmosphärischem Druck oder Überdruck abläuft. Im letzteren Fall weist der verschließbare, als Überdruckbehälter ausgebildete Aufnahmebehälter vorzugsweise ein Überdruckventil auf.

Gemäß einer Weiterbildung der Erfindung weist der Generator für die langwellige elektromagnetische Primärstrahlung ein verschließbares Gehäuse zur Aufnahme des Gasreaktionsrohres und des Aufnahmebehälters auf. Vorzugsweise ist das Generatorgehäuse mit einem Zuleitungsanschluß versehen, über den z.B. gasförmige Ausgangsstoffe dem Gehäuseinneren bzw. dem verschließbaren Aufnahmebehälter über dessen eigenen Zuleitungsanschluß zugeführt werden können. Bei der Durchführung von Aufschlüssen mit Sauerstoff als Oxydationsmittel kann über den Zuleitungsanschluß Stickstoff zugeführt werden, um die Bildung von giftigem Ozon, das nach außen dringen kann, zu verhindern. In diesem Fall steht nur der im aufzuschließenden Ausgangsstoff enthaltene Sauerstoff zur Verfügung.

Ferner ist das Generatorgehäuse vorzugsweise mit einem Entlüftungsanschluß versehen, so daß im Gehäuseinnere oder im verschließbaren Aufnahmebehälter, wenn dessen Entlüftungsanschluß an denjenigen des Gehäuses anschlossen ist, atmosphärischer Druck oder bei Verwendung eines Rückschlagventils Überdruck herrschen.

Nachstehend ist die Erfindung anhand von zwei Ausführungsbeispielen unter Bezugnahme auf die Zeichnung näher beschrieben. Es zeigen
- Fig. 1: eine Vorderansicht eines ersten Ausführungsbeispiels der erfindungsgemäßen Vorrichtung im Schnitt, und
- Fig. 2: eine Vorderansicht eines zweiten Ausführungsbeispiels der erfindungsgemäßen Vorrichtung im Schnitt.

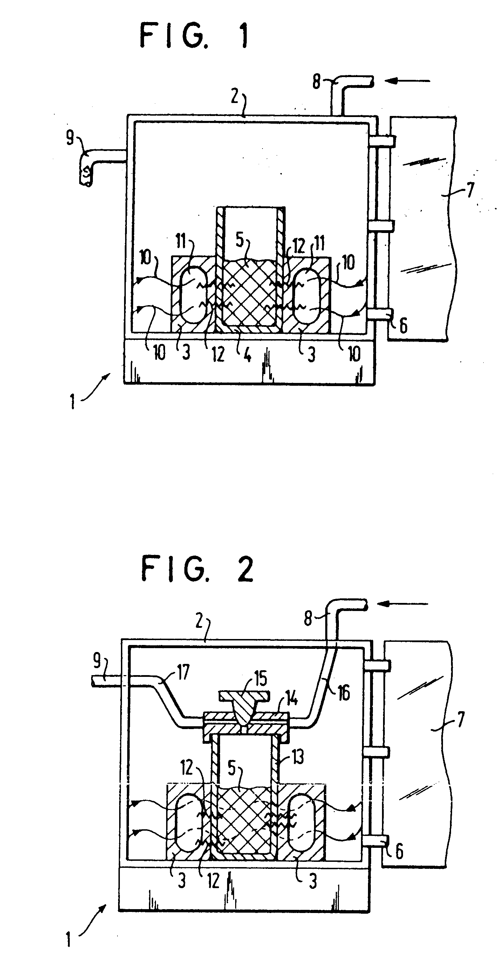

Die erfindungsgemäße Vorrichtung noch den Fig. 1 und 2 ist zum Auslösen und Fördern eines chemischen Prozesses, im vorliegenden Fall eines Aufschlusses, durch indirekte Bestrahlung eines in einer Gasatmosphäre befindlichen Ausgangsstoffes mit Mikrowellen vorgesehen.

Die in Fig. 1 dargestellte Vorrichtung umfaßt einen Mikrowellengenerator in Form eines Mikrowellenofens 1 mit einem verschließbaren Gehäuse 2 zur Aufnahme eines Gasreaktionsrohres 3 und wenigstens eines offenen Aufnahmebehälters 4, der mit dem aufzuschließenden Ausgangsstoff 5 in fester Form gefüllt ist.

Der Mikrowellenofen 1 weist eine mittels einer Scharnieranordnung 6 schwenkbar am Gehäuse 2 befestigte Tür 7, einen Zuleitungsanschluß 8 sowie einen Entlüftungsanschluß 9 mit einem Rückschlagventil auf. Der Mikrowellenofen 1 ist zur Ausstrahlung ungepulster Mikrowellen 10 und mit einer nicht gezeigten Steuereinrichtung zur Steuerung seiner Dauerleistung ausgebildet. Letztere kann auf 25, 50, 75 und 100 % eingestellt werden.

Das Gasreaktionsrohr 3 ist in Form eines Ringrohres ausgebildet, welches einen den Aufnahmebehälter 4 aufnehmenden Raum umschließt. Der Innenraum 11 des Gasreaktionsrohres 3 ist mit unter Unterdruck stehendem Argon mit einem Quecksilberzusatz gefüllt. Der Unterdruck der Gasfüllung ist so gewählt, daß die freie mittlere Weglänge und damit die kinetische Energie der Gasmoleküle bzw. -atome beim gegenseitigen Aufprall so groß ist, daß sie unter dem Einfluß der Bestrahlung mit den Mikrowellen 10 zur Emission einer kurzwelligeren Strahlung 12, im vorliegenden Fall von UV-Licht, angeregt werden. Das Gasreaktionsrohr 3 kann durch Ausrüstung mit einem optischen Resonator zu einem Laser-Oszillator weitergebildet werden.

Wie bereits erwähnt, soll der feste Ausgangsstoff 5 aufgeschlossen werden. Dazu wird er mit einem gasförmigen Ausgangsstoff, im vorliegenden Fall mit dem in der Luft befindlichen Sauerstoff, in Kontakt gebracht und die Oxydation ohne Wärmezufuhr unter atmosphärischem Druck durchgeführt. Zu diesem Zweck wird der offene Aufnahmebehälter 4 mit dem eingefüllten Ausgangsstoff 5 in den vom Gasreaktionsrohr 3 umschlossenen Raum im Mikrowellenofen 1 eingesetzt. Sodann wird der Mikrowellenofen 1 mittels der Tür 7 geschlossen und seine Dauerleistung auf 25 % eingestellt, woraufhin er eingeschaltet wird. Die Intensität der nun von den Wänden des Mikrowellenofen-Gehäuses 2 abgestrahlten Mikrowellen 10 ist ausreichend hoch, um die unter Unterdruck stehende Gasfüllung des Gasreaktionsrohrs 3 zur Emission von UV-Licht 12 anzuregen. Dabei absorbiert die Gasfüllung im Gasreaktionsrohr 3 den Großteil der Mikrowellen 10, so daß eine möglicherweise auftretende Erwärmung des Ausgangsstoffes 5 vernachlässigbar ist. Unter dem Einfluß der UV-Bestrahlung reagiert der im Gehäuse 2 befindliche Luftsauerstoff durch Bindungsspaltung und durch Bindungsneubildung, wobei als freie Radikale einatomiger Sauerstoff, Sauerstoffionen und Ozon entstehen. Diese freien Radikale verbinden sich mit dem Ausgangsstoff 5, wodurch dieser oxydiert, d.h. aufgeschlossen wird. Zur Aufrechterhaltung der chemischen Reaktion wird, falls erforderlich, Luft oder reiner Sauerstoff durch den Zuleitungsanschluß 8 in das Gehäuseinnere eingeführt. Der atmosphärische Druck im Gehäuse 2 wird durch entsprechende Einstellung des Rückschlagventils im Entlüftungsanschluß 9 aufrechterhalten.

Die in Fig. 2 dargestellte Vorrichtung ist im Unterschied zu derjenigen nach Fig. 1 zur Durchführung des Aufschlusses unter Wärmezufuhr und entsprechendem Überdruck vorgesehen. Zu diesem Zweck wird der Ausgangsstoff 5 in einen Überdruckbehälter 13 eingefüllt und dieser mit einem Deckel 14 druckdicht verschlossen. Der Deckel 14 weist zwei Ausgänge auf, in denen ein Überdruckventil 15 sitzt. Beide Ausgänge werden mittels je eines Schlauches 16, 17 an den Zuleitungsanschluß 8 bzw. den Entlüftungsanschluß 9 angeschlossen. Von letzterem wird der das Rückschlagventil nach Fig. 1 enthaltende Teil abgeschraubt.

Die Dauerleistung des Mikrowellenofens 1 wird je nach gewünschter Wärmezufuhr auf 50, 75 oder 100 % eingestellt. Die Gasfüllung im Innenraum 11 des Gasreaktionsrohres 3 absorbiert den zur Emission des UV-Lichtes 12 erforderlichen Teil der von den Wänden des Mikrowellenofen-Gehäuses 2 abgestrahlten Mikrowellen 10. Der verbleibende, durch die Gasfüllung hindurchtretende Teil der Mikrowellen 10 gelangt bis zum Ausgangsstoff 5 und erhitzt denselben bei entsprechender Druckerhöhung. Die durch das UV-Licht 12 und die Mikrowellen 10 dem festen Ausgangsstoff 5 und dem gasförmigen Ausgangsstoff Sauerstoff im Überdruckbehälter 13 zugeführte Energie sowie der im Überdruckbehälter 13 entstehende Überdruck intensivieren die Bildung der freien Radikale und den Ablauf der chemischen Reaktion. Zur Aufrechterhaltung derselben wird Sauerstoff durch die Zuleitung 8 und den Schlauch 16 dem Überdruckbehälter 13 zugeführt. Das Überdruckventil 15 ist auf den maximal gewünschten Überdruck im Überdruckbehälter 13 eingestellt.

## Patentansprüche

1. Verfahren zum Auslösen und/oder Fördern chemischer Prozesse durch Bestrahlung von in einer Gasatmosphäre befindlichen Ausgangsstoffen mit langwelliger elektromagnetischer Primärstrahlung durch ein unter Unterdruck stehendes Gas hindurch, das einen bestimmten Anteil der Primärstrahlung unter Erzeugung einer sekundären, auf die Ausgangsstoffe gerichteten Strahlung kürzerer Wellenlänge absorbiert,
**dadurch gekennzeichnet**,
daß die Primärstrahlung in ihrer Strahlungsleistung derart gesteuert wird, daß sie bei geringer Strahlungsleistung im wesentlichen vollständig von dem unter Unterdruck stehenden Gas absorbiert wird, wobei durch die dabei erzeugte Sekundärstrahlung die Ausgangsstoffe im wesentlichen erwärmungsfrei bestrahlt werden, und daß bei höheren Strahlungsleistungen entsprechende Anteile der Primärstrahlung durch das unter Unterdruck stehende Gas hindurchtreten und eine entsprechende Erwärmung der Ausgangsstoffe herbeiführen.

2. Verfahren nach Anspruch 1,
**dadurch gekennzeichnet**,
daß als Primärstrahlung Mikrowellen (10) verwendet werden.

3. Verfahren nach Anspruch 1 oder 2,
**dadurch gekennzeichnet**,
daß als Primärstrahlung (10) ungepulste, in ihrer Dauerleistung steuerbare Wellen verwendet werden.

4. Verfahren nach Anspruch 1,
**dadurch gekennzeichnet**,
daß als Sekundärstrahlung UR-Strahlen, sichtbare Lichtstrahlen oder vorzugsweise UV-Strahlen (12) erzeugt werden.

5. Verfahren nach Anspruch 1 oder 4,
**dadurch gekennzeichnet**,
daß die Sekundärstrahlung (12) in einem Edelgas mit oder ohne Quecksilberzusatz erzeugt wird.

6. Verfahren nach Anspruch 1 oder 4,
**dadurch gekennzeichnet**,
daß die Sekundärstrahlung (12) in Stickstoff erzeugt wird.

7. Verfahren nach wenigstens einem der Ansprüche 1 und 4 bis 6,
**dadurch gekennzeichnet**,
daß die Sekundärstrahlung (12) durch den Laser-Effekt verstärkt wird.

8. Verfahren nach wenigstens einem der vorhergehenden Ansprüche,
**dadurch gekennzeichnet**,
daß der durch die Sekundärstrahlung (12) ausgelöste bzw. beschleunigte chemische Prozeß bei atmosphärischem oder Überdruck durchgeführt wird.

9. Verfahren nach wenigstens einem der vorhergehenden Ansprüche,
**dadurch gekennzeichnet**,
daß aggressive Radikale als Reaktionsprodukte gebildet werden.

10. Verfahren nach Anspruch 9,
**dadurch gekennzeichnet**,
daß aggressive Radikale von gasförmigen Oxydationsmitteln, vorzugsweise Sauerstoff oder Halogenen, abgespalten werden.

11. Verfahren nach Anspruch 10,
**dadurch gekennzeichnet**,
daß aggressive Radikale vom Sauerstoff in den Ausgangsstoffen (5) abgespalten werden.

12. Verfahren nach wenigstens einem der vorhergehenden Ansprüche,
**dadurch gekennzeichnet**,
daß Reaktionsprodukte aus einem den Ausgangsstoffen (5) zugeführten (durch 8 bzw. 8, 16) Gas gebildet werden.

13. Vorrichtung zum Auslösen und/oder Fördern chemischer Prozesse durch Bestrahlung von in einer Gasatmosphäre befindlichen Ausgangsstoffen (O₂; 5) mit elektromagnetischer Strahlung zur Bildung von Reaktionsprodukten, insbesondere nach Anspruch 1, mit wenigstens einem Aufnahmebehälter (4; 13) für die Ausgangsstoffe (O₂; 5), mit einem Generator (1) zur Erzeugung einer langwelligen elektromagnetischen Primärstrahlung (10) und mit einem Gasreaktionsrohr (3), das mit einem Gas unter Unterdruck gefüllt ist, welches bei Bestrahlung mit der Primärstrahlung (10) einen bestimmten Anteil derselben absorbiert und angeregt wird zur Emission einer sekundären, auf die Ausgangsstoffe (O₂; 5) einwirkenden Strahlung (12) kürzerer Wellenlänge, die Bindungsspaltungen und/oder Bindungsbildungen in den Ausgangsstoffen (O₂; 5) bewirkt,
**dadurch gekennzeichnet**,
daß der Generator (1) eine maximale Leistung aufweist, der eine maximale Primärstrahlungsleistung entspricht, die die vom Gas im Gasreaktionsrohr (3) maximal absorbierbare Primärstrahlungsmenge pro Zeiteinheit derart übersteigt, daß der verbleibende, nicht absorbierbare und auf die Ausgangsstoffe (O₂; 5) gerichtete Primärstrahlungsanteil Bindungsspaltungen und/oder Bindungsbildungen in den Ausgangsstoffen (O₂; 5) bewirkt, und daß eine Steuereinrichtung zur Steuerung der Primärstrahlungsleistung vorgesehen ist.

14. Vorrichtung nach Anspruch 13,
**dadurch gekennzeichnet**,
daß der Generator (1) zur Ausstrahlung ungepulster Primärstrahlung (10) ausgebildet und die Steuereinrichtung zur Steuerung seiner Dauerleistung vorgesehen ist.

15. Vorrichtung nach Anspruch 13 oder 14,
**dadurch gekennzeichnet**,
daß der Generator ein Mikrowellengenerator (1) ist.

16. Vorrichtung nach wenigstens einem der Ansprüche 13 bis 15,
**dadurch gekennzeichnet**,
daß der Generator (1) ein verschließbares Gehäuse (2) zur Aufnahme des Gasreaktionsrohres (3) und des Aufnahmebehälters (4; 13) aufweist.

17. Vorrichtung nach wenigstens einem der Ansprüche 13 bis 16,
**dadurch gekennzeichnet**,
daß der Aufnahmebehälter ein offener Behälter (4) für feste oder flüssige Ausgangsstoffe (5) ist.

18. Vorrichtung nach wenigstens einem der Ansprüche 13 bis 17,
**dadurch gekennzeichnet**,
daß der Aufnahmebehälter ein verschließbarer Behälter (13) ist.

19. Vorrichtung nach Anspruch 18,
**dadurch gekennzeichnet**,
daß der Behälter ein Überdruckbehälter (13) ist.

20. Vorrichtung nach Anspruch 19,
**dadurch gekennzeichnet**,
daß der Überdruckbehälter (13) ein Überdruckventil (15) aufweist.

21. Vorrichtung nach wenigstens einem der Ansprüche 16 bis 20,
**dadurch gekennzeichnet**,
daß das Gehäuse (2) des Generators (1) und/oder der verschließbare Aufnahmebehälter (13) einen Entlüftungsanschluß (9, 17) aufweisen.

22. Vorrichtung nach wenigstens einem der Ansprüche 16 bis 21,
**dadurch gekennzeichnet**,
daß das Gehäuse (2) des Generators (1) und/oder der verschließbare Aufnahmebehälter (13) einen Zuleitungsanschluß (8; 16) zur Zufuhr von gasförmigen Ausgangsstoffen (O₂) oder Stickstoff aufweist.

23. Vorrichtung nach wenigstens einem der Ansprüche 13 bis 22,
**dadurch gekennzeichnet**,
daß das Gasreaktionsrohr (3) die Form eines Ringrohres aufweist, und daß der vom Ringrohr umschlossene Raum zur Aufnahme des Aufnahmebehälters (4; 13) für Ausgangsstoffe (O₂; 5) vorgesehen ist.

24. Vorrichtung nach wenigstens einem der Ansprüche 13 bis 23,
**dadurch gekennzeichnet**,
daß das Gasreaktionsrohr (3) mit einem zur Emission von UR-Licht, sichtbarem Licht oder vorzugsweise UV-Licht (12) geeignetem Gas gefüllt ist.

25. Vorrichtung nach Anspruch 24,
**dadurch gekennzeichnet**,
daß das Gasreaktionsrohr (3) mit Edelgas mit oder ohne Quecksilberzusatz gefüllt ist.

26. Vorrichtung nach Anspruch 24,
**dadurch gekennzeichnet**,
daß das Gasreaktionsrohr (3) mit Stickstoff gefüllt ist.

27. Vorrichtung nach wenigstens einem der Ansprüche 13 bis 26,
**dadurch gekennzeichnet**,
daß das Gasreaktionsrohr (3) als Teil eines Laser-Oszillators ausgebildet ist.

## Claims

1. Process for initiating and/or promoting chemical processes by means of irradiation of starting substances, in a gaseous atmosphere, with long wavelength electromagnetic primary radiation, through a gas at reduced pressure, which gas absorbs a certain proportion of primary radiation with the generation of secondary radiation of shorter wavelength, directed towards the starting substances,
characterised in that,
the radiation power of the primary radiation is controlled in such a way that at lower radiation power it is substantially completely absorbed by the gas at reduced pressure, whereby the starting substances are irradiated by the generated secondary radiation substantially without heating, and in that at higher radiation powers corresponding proportions of the primary radiation penetrate through the gas at reduced pressure and give rise to a corresponding heating of the starting substances.

2. Process according to claim 1,
characterised in that,
microwaves (10) are employed as primary radiation.

3. Process according to claim 1 or 2,
characterised in that,
non-pulsed waves, controllable in their continuous power, are employed as primary radiation (10).

4. Process according to claim 1,
characterised in that,
UR radiation, visible light radiation or preferably UV radiation (12) is generated as secondary radiation.

5. Process according to claim 1 or 4,
characterised in that,
the secondary radiation (12) is generated in a noble gas, with or without the addition of mercury.

6. Process according to claim 1 or 4,
characterised in that,
the secondary radiation (12) is generated in nitrogen.

7. Process according to any of claims 1 and 4 to 6,
characterised in that,
the secondary radiation (12) is amplified by the laser effect.

8. Process according to any preceding claim,
characterised in that,
the chemical process initiated or accelerated by means of the secondary radiation (12) is carried out at atmospheric pressure or at a pressure in excess of atmospheric.

9. Process according to any preceding claim,
characterised in that,
aggressive radicals are formed as reaction products.

10. Process according to claim 9,
characterised in that,
the aggressive radicals are split off from gaseous oxidizing agents, preferably oxygen or halogens.

11. Process according to claim 10,
characterised in that,
the aggressive radicals are split off from oxygen in the starting substances (5).

12. Process according to any preceding claim,
characterised in that,
reaction products are formed from a gas supplied (through 8 or 8, 16) to the starting substances.

13. Device for initiating and/or promoting chemical processes by means of irradiation of starting substances (O₂; 5), in a gaseous atmosphere, with electromagnetic radiation, for forming reaction products, in particular in accordance with claim 1, having at least one receptacle (4; 13) for the starting substances (O₂; 5), a generator (1) for generating long wavelength electromagnetic primary radiation (10), and having a gas reaction tube (3), which is filled with a gas at reduced pressure, which gas when irradiated with the primary radiation (10) absorbs a certain proportion thereof and is excited to emit secondary radiation (12) of shorter wavelength, which acts on the starting substances (O₂; 5), causing decomposition of compounds and/or the formation of compounds in the starting substances (O₂; 5),
characterised in that,
the generator (1) has a maximum power which corresponds to a maximum primary radiation power which so exceeds the maximum amount of primary radiation which can be absorbed by the gas in the gas reaction tube (3) per unit time that the remaining, non-absorbable proportion of primary radiation, directed at the starting substances (O₂; 5), causes the decomposition of compounds and/or the formation of compounds in the starting substances (O₂; 5), and in that a control device is provided for controlling the primary radiation power.

14. Device according to claim 13,
characterised in that,
the generator (1) is formed for emitting non-pulsed primary radiation (10) and the control device is provided for controlling the continuous power thereof.

15. Device according to claim 13 or 14,
characterised in that,
the generator is a microwave generator (1).

16. Device according to any of claims 13 to 15,
characterised in that,
the generator (1) has a closeable housing (2) for accommodating the gas reaction tube (3) and the receptacle (4; 13).

17. Device according to any of claims 13 to 16,
characterised in that,
the receptacle is an open container (4) for solid or liquid starting substances (5).

18. Device according to any of claims 13 to 17,
characterised in that,
the receptacle is a closeable container (13).

19. Device according to claim 18,
characterised in that,
the container is a pressure vessel (13).

20. Device according to claim 19,
characterised in that,
the pressure vessel (13) has a pressure relief valve (15).

21. Device according to any of claims 16 to 20,
characterised in that,
the housing (2) of the generator (1) and/or the closeable receptacle (13) has an evacuation connection (9, 17).

22. Device according to any of claims 16 to 21,
characterised in that,
the housing (2) of the generator (1) and/or the closeable receptacle (13) has a supply connection (8; 16) for the supply of gaseous starting substances (O₂) or nitrogen.

23. Device according to any of claims 13 to 22,
characterised in that,
the gas reaction tube (3) has the form of an annular tube, and in that the space enclosed by the annular tube is provided for accommodating the receptacle (4; 13) for starting substances (O₂; 5).

24. Device according to any of claims 13 to 23,
characterised in that,
the gas reaction tube (3) is filled with a gas suitable for emitting UR light, visible light or preferably UV light (12).

25. Device according to claim 24,
characterised in that,
the gas reaction tube (3) is filled with noble gas, with or without the addition of mercury.

26. Device according to claim 24,
characterised in that,
the gas reaction tube (3) is filled with nitrogen.

27. Device according to any of claims 13 to 26,
characterised in that,
the gas reaction tube (3) is formed as part of a laser oscillator.

## Revendications

1. Procédé destiné à initier et/ou à favoriser des procédés chimiques par irradiation de matières premières se trouvant dans une atmosphère gazeuse avec une radiation primaire électromagnétique de grande longueur d'onde en traversant un gaz se trouvant sous pression réduite qui absorbe une part déterminée de la radiation primaire en produisant une radiation secondaire de longueur d'onde plus courte, dirigée vers les matières premières, caractérisé en ce que la radiation primaire a une puissance de radiation contrôlée, de sorte qu'elle est absorbée, dans le cas d'une puissance de radiation faible, essentiellement totalement par le gaz se trouvant sous pression réduite, étant entendu que les matières premières sont irradiées essentiellement sans échauffement par l'intermédiaire de la radiation secondaire alors produite, et que, dans le cas de puissances de radiation plus élevées, les parts correspondantes de la radiation primaire traversent le gaz se trouvant sous pression réduite et provoquent un échauffement correspondant des matières premières.

2. Procédé selon la revendication 1, caractérisé en ce qu'on utilise des micro-ondes (10) en tant que radiation primaire.

3. Procédé selon la revendication 1 ou 2, caractérisé en ce qu'on utilise des ondes non pulsées à puissance continue contrôlable (10) en tant que radiation primaire.

4. Procédé selon la revendication 1, caractérisé en ce que des rayonnements infrarouges, des rayonnements lumineux visibles ou de préférence des rayonnements ultraviolets (12) sont produits en tant que radiation secondaire.

5. Procédé selon la revendication 1 ou 4, caractérisé en ce que la radiation secondaire (12) est produite dans un gaz rare avec ou sans ajout de mercure.

6. Procédé selon la revendication 1 ou 4, caractérisé en ce que la radiation secondaire (12) est produite dans de l'azote.

7. Procédé selon au moins l'une des revendications 1 et 4 à 6, caractérisé en ce qu'on renforce la radiation secondaire (12) par l'effet du laser.

8. Procédé selon au moins l'une des revendications précédentes, caractérisé en ce qu'on réalise le procédé chimique, initié ou accéléré par la radiation secondaire (12), sous pression atmosphérique ou sous surpression.

9. Procédé selon au moins l'une des revendications précédentes, caractérisé en ce que des radicaux agressifs sont établis sous forme de produits réactionnels.

10. Procédé selon la revendication 9, caractérisé en ce qu'on sépare les radicaux agressifs des oxydants gazeux, de préférence de l'oxygène ou des halogènes.

11. Procédé selon la revendication 10, caractérisé en ce qu'on sépare les radicaux agressifs de l'oxygène dans les matières premières (5).

12. Procédé selon au moins l'une des revendications précédentes, caractérisé en ce que les produits réactionnels sont formés à partir d'un gaz amené (par 8 ou 8, 16) aux matières premières (5).

13. Dispositif destiné a initier et/ou à favoriser des procédés chimiques par irradiation de matières premières (O₂ ; 5) se trouvant dans une atmosphère gazeuse avec une radiation électromagnétique pour former des produits réactionnels, en particulier selon la revendication 1, comprenant au moins un récipient de réception (4 ; 13) destiné aux matières premières (O₂ ; 5), un générateur (1) de production d'une radiation primaire électromagnétique de grande longueur d'onde (10) et un tube-laboratoire à gaz (3) qui est rempli d'un gaz sous pression réduite, lequel absorbe une part déterminée lors d'une irradiation avec la radiation primaire (10) et l'excite pour l'émission d'une radiation secondaire (12) de longueur d'onde plus courte, exercée sur les matières premières (O₂ ; 5), qui provoque des ouvertures de liaison et/ou des formations de liaison dans les matières premières (O₂ ; 5), caractérisé en ce que le générateur (1) présente une puissance maximale, à laquelle correspond une puissance maximale de radiation primaire, qui dépasse la quantité de radiation primaire par unité de temps, absorbable au maximum par le gaz du tube-laboratoire à gaz (3), de sorte que la part de radiation primaire restante, non absorbable et dirigée vers les matières premières (O₂ ; 5), provoque des ouvertures de liaison et/ou des formations de liaison dans les matières premières (O₂ ; 5) et qu'il est prévu un dispositif de commande pour contrôler la puissance de radiation primaire.

14. Dispositif selon la revendication 13, caractérisé en ce que le générateur (1) est formé pour émettre une radiation primaire non pulsée (10) et en ce que le dispositif de commande, pour contrôler sa puissance continue, est prévu.

15. Dispositif selon la revendication 13 ou 14, caractérisé en ce que le générateur est un générateur de micro-ondes (1).

16. Dispositif selon au moins l'une des revendications 13 à 15, caractérisé en ce que le générateur (1) présente un boîtier qui ferme à clé (2) pour recevoir le tube-laboratoire à gaz (3) et le récipient de réception (4 ; 13).

17. Dispositif selon au moins l'une des revendications 13 à 16, caractérisé en ce que le récipient de réception est un récipient ouvert (4) destiné à des matières premières (5) solides ou liquides.

18. Dispositif selon au moins l'une des revendications 13 à 17, caractérisé en ce que le récipient de réception est un récipient qui ferme à clé (13).

19. Dispositif selon la revendication 18, caractérisé en ce que le récipient est un récipient de surpression (13).

20. Dispositif selon la revendication 19, caractérisé en ce que le récipient de surpression (13) présente une soupape de surpression (15).

21. Dispositif selon au moins l'une des revendications 16 à 20, caractérisé en ce que le boîtier (2) du générateur (1) et/ou le récipient de réception qui ferme à clé (13) présentent un branchement de purge (9, 17).

22. Dispositif selon au moins l'une des revendications 16 à 21, caractérisé en ce que le boîtier (2) du générateur (1) et/ou le récipient de réception qui ferme à clé (13) présentent un branchement de conduite d'alimentation (8 ; 16) pour une alimentation des matières premières gazeuses (O₂) ou de l'azote.

23. Dispositif selon au moins l'une des revendications 13 à 22, caractérisé en ce que le tube-laboratoire à gaz (3) présente la forme d'un tuyau circulaire et que l'espace entouré par le tuyau circulaire est prévu pour recevoir le récipient de réception (4 ; 13) destiné aux matières premières (O₂ ; 5).

24. Dispositif selon au moins l'une des revendications 13 à 23, caractérisé en ce que le tube-laboratoire à gaz (3) est rempli d'un gaz qui convient pour l'émission d'une lumière infrarouge, d'une lumière visible ou de préférence d'une lumière ultraviolette (12).

25. Dispositif selon la revendication 24, caractérisé en ce que le tube-laboratoire à gaz (3) est rempli d'un gaz noble avec ou sans ajout de mercure.

26. Dispositif selon la revendication 24, caractérisé en ce que le tube-laboratoire à gaz (3) est rempli d'azote.

27. Dispositif selon au moins l'une des revendications 13 à 26, caractérisé en ce que le tube-laboratoire à gaz (3) fait partie d'un oscillateur à laser.
